# FASCICULE DE BREVET EUROPEEN

(11) **EP 2 826 391 B1**
(45) Date de publication et mention de la délivrance du brevet: **07.09.2016**
(21) Numéro de dépôt: 13176444.1
(22) Date de dépôt: 15.07.2013
(51) Int. Cl.: A44C 5/10

(54) **Procédé de fabrication de maillons de bracelets**
Verfahren zur Herstellung von Armbandkettengliedern
Method for manufacturing bracelet links

(43) Date de publication de la demande: 21.01.2015
(73) Titulaire: The Swatch Group Management Services AG, 2502 Biel/Bienne (CH)
(72) Inventeur: Gracia, Jean-Claude, 2572 Mörigen (CH)
(74) Mandataire: Supper, Marc

(56) Documents cités:
- FR-A1- 2 561 956
- GB-A- 2 374 516
- US-A1- 2002 056 267

## Description

La présente invention concerne un procédé de fabrication de maillons de bracelets. Plus précisément, l'invention concerne un procédé de fabrication en lots de maillons de bracelets à partir d'un profilé.

Deux techniques couramment utilisées pour la fabrication de maillons de bracelet consistent pour l'une à usiner les maillons intégralement par décolletage, et pour l'autre à réaliser des ébauches de maillons par frappage ou matriçage, puis à retoucher les ébauches par usinage. Ces deux techniques sont de type pièce-à-pièce. Les cadences de fabrication sont relativement peu élevées et le prix de revient des maillons assez élevé.

FR2561956 décrit un procédé de fabrication en lot d'une pluralité de maillons de bracelet à partir d'un profilé.

La présente invention a pour but de remédier à ces inconvénients en procurant un procédé de fabrication en lots de maillons de bracelets.

A cet effet, la présente invention concerne un procédé de fabrication en lots d'une pluralité de maillons de bracelet, caractérisé en ce qu'il comprend les étapes de :
a) se munir d'un profilé d'un matériau dans lequel les maillons à venir sont délimités les uns par rapport aux autres transversalement par des fentes s'étendant selon une direction générale d'extrusion du profilé ;
b) pratiquer, si nécessaire, dans le profilé encore d'un seul tenant un premier usinage d'ébauche ;
c) tronçonner le profilé sur une longueur déterminée définissant une largeur des maillons afin d'obtenir un anneau portant à sa périphérie une ébauche des maillons à venir ;
d) mettre les maillons en forme finale par un usinage d'ébauche final ;
e) amincir la surface de l'anneau assurant la liaison des maillons entre eux jusqu'à séparation des maillons les uns des autres.

Grâce à ces caractéristiques, la présente invention procure un procédé de fabrication en lots de maillons de bracelets dans lequel les maillons sont usinés alors que le profilé est encore d'un seul tenant ou, au plus tard, alors que le profilé a été débité en une pluralité d'anneaux portant chacun à leur périphérie une pluralité d'ébauches de maillons. On peut donc usiner les ébauches de maillons alors que celles-ci sont encore en lots, ce qui permet de réduire les coûts de fabrication et d'accélérer les cadences de production. Une dernière étape peut consister à polir les maillons une fois que ceux-ci ont été individualisés. Avantageusement, les ébauches de maillons sont délimitées les unes par rapport aux autres transversalement par des fentes qui viennent de matière lors de l'extrusion du profilé, de sorte que les ébauches de maillons sont déjà individualisées alors que le profilé est encore d'un seul tenant, ce qui va ensuite faciliter les opérations ultérieures de finissage des maillons.

D'autres caractéristiques et avantages de la présente invention ressortiront plus clairement de la description détaillée qui suit d'un exemple de mise en oeuvre du procédé de l'invention, cet exemple étant donné à titre purement illustratif et non limitatif seulement en liaison avec le dessin annexé sur lequel :
- la figure 1 est une vue en perspective d'un profilé selon l'invention ;
- la figure 2 est une vue en perspective d'un anneau sectionné dans le profilé de la figure 1 ;
- la figure 3 est une vue en perspective de l'anneau de la figure 2 dans lequel ont été réalisées les opérations d'usinage d'ébauche des maillons, et
- la figure 4 est une vue en perspective d'un maillon à l'état terminé.

La présente invention procède de l'idée générale inventive qui consiste à usiner en lots des maillons de bracelets dans un profilé. Une partie au moins des opérations d'usinage peut être effectuée alors que le profilé est encore d'un seul tenant, ou au plus tard lorsque le profilé a été sectionné en une pluralité d'anneaux dont la longueur détermine une largeur des anneaux et qui regroupent chacun une pluralité d'ébauches de maillons. Les opérations d'usinage peuvent donc être effectuées alors que les ébauches de maillons sont encore en lots, ce qui accélère les cadences de fabrication et permet de réduire le prix de revient.

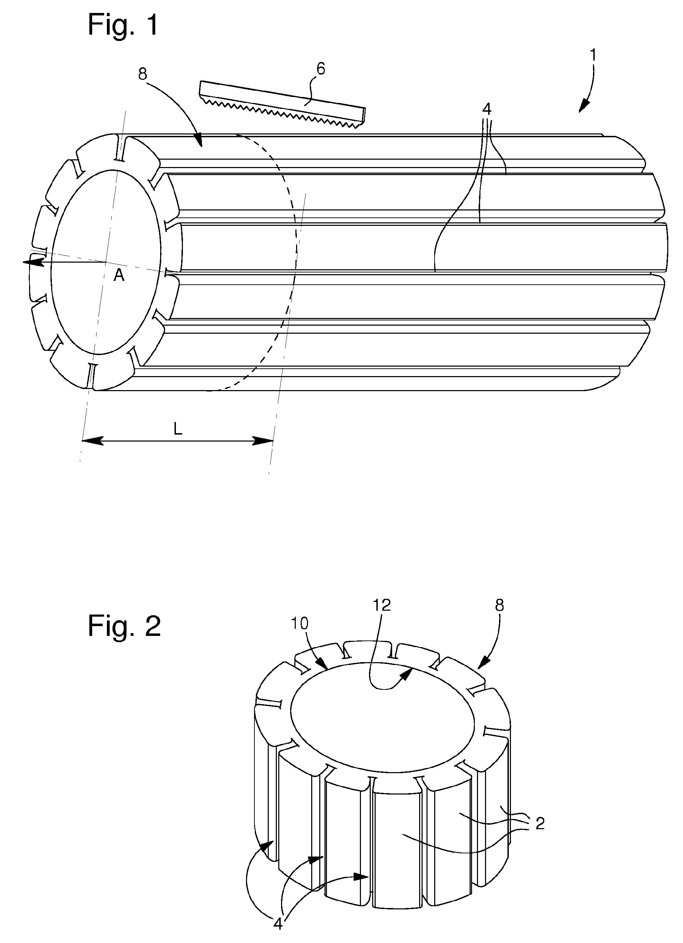

La figure 1 est une vue en perspective d'un profilé pour la mise en oeuvre du procédé de l'invention. Désigné dans son ensemble par la référence numérique générale 1, ce profilé peut être réalisé en tout matériau extrudable tel que de l'aluminium, de l'or, de l'argent, du titane, de la céramique ou bien encore un matériau plastique. Le profilé 1 est extrudé selon une direction générale d'extrusion A.

Comme visible sur la figure 1, une pluralité d'ébauches de maillons 2 sont délimitées les unes par rapport aux autres transversalement par des fentes 4 s'étendant selon la direction générale d'extrusion A du profilé 1. Si nécessaire, les premières opérations d'usinage des ébauches de maillons 2 peuvent être effectuées dans le profilé 1 alors que celui-ci est encore d'un seul tenant. Au plus tard, les opérations d'usinage de dégrossissage et de finition des ébauches de maillons 2 seront effectuées après que le profilé 1 aura été tronçonné au moyen d'un outil coupant 6 selon une pluralité d'anneaux 8 dont un a été reproduit à la figure 2. La longueur L de tronçonnement du profilé 1 définit la largeur des ébauches de maillons 2.

Chaque anneau 8 regroupe sur sa périphérie 10 une pluralité d'ébauches de maillons 2. Selon un premier mode de réalisation de l'invention non illustré, les ébauches de maillons 2 sont réparties radialement sur la périphérie intérieure de l'anneau 8. Selon un second mode de réalisation illustré à la figure 2, les ébauches de maillons 2 sont réparties radialement sur la périphérie extérieure de l'anneau 8. Comme on le verra ci-après, la périphérie 10 de l'anneau 8 forme une surface 12 qui assure la liaison des ébauches de maillons 2 entre elles jusqu'à séparation des maillons les uns des autres.

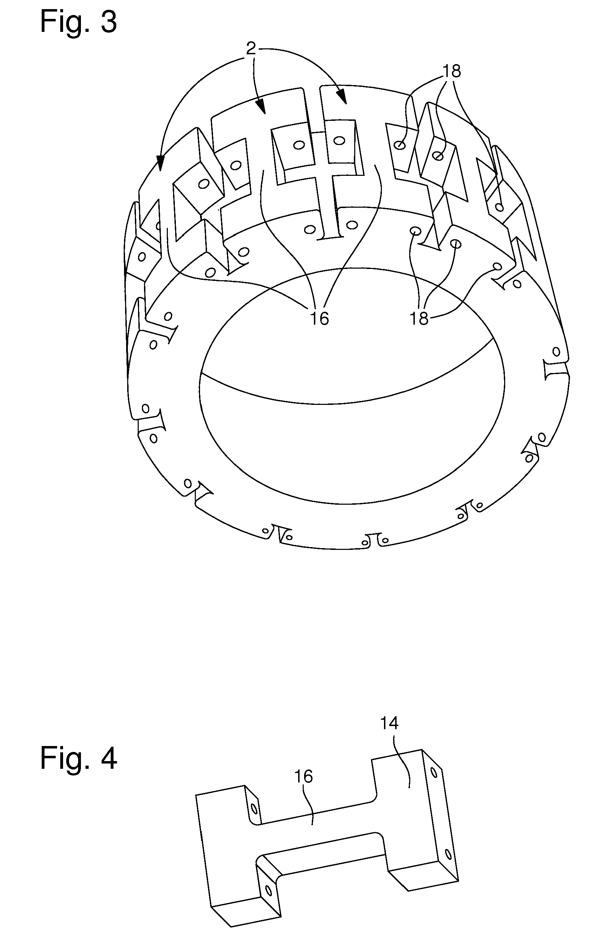

Le profilé 1 peut être plein. De préférence, il sera creux. Conformément à l'invention, on met les ébauches de maillons 2 en forme finale par un usinage d'ébauche final. Ces étapes d'usinage se font alors que les ébauches de maillons 2 sont encore en lot. Ces étapes d'usinage comprennent l'usinage de la forme extérieure des ébauches de maillons 2. Par exemple, les maillons finis 14 dont un exemplaire est représenté à la figure 4 ont une forme de H, avec une barre transversale 16 s'étendant selon la direction générale d'extrusion A. L'étape de mise en forme finale des ébauches de maillons 2 comprend en outre le perçage de trous 18 destinés à recevoir des barrettes de fixation (non illustrées) des maillons entre eux.

L'étape finale du procédé de fabrication selon l'invention consiste à amincir la surface 12 de l'anneau 8 jusqu'à ce que les ébauches de maillons 2 se désolidarisent pour former une pluralité de maillons finis 14. Une dernière étape de polissage des maillons finis 14 peut être envisagée.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. On comprendra en particulier qu'une partie des opérations d'usinage peut être effectuée alors que le profilé est encore d'un seul tenant, ou bien que l'on peut d'emblée débiter le profilé selon une pluralité d'anneaux dont la largeur correspond à celle des anneaux.

## Revendications

1. Procédé de fabrication en lot d'une pluralité de maillons de bracelet (14), **caractérisé en ce qu'**il comprend les étapes de :
a) se munir d'un profilé (1) d'un matériau dans lequel les ébauches de maillons (2) sont délimitées les unes par rapport aux autres transversalement par des fentes (4) s'étendant selon une direction générale d'extrusion (A) du profilé (1) ;
b) pratiquer, si nécessaire, dans le profilé (1) encore d'un seul tenant un premier usinage d'ébauche ;
c) tronçonner le profilé (1) sur une longueur déterminée (L) définissant une largeur des ébauches de maillons (2) afin d'obtenir un anneau (8) portant à sa périphérie (10) les ébauches de maillons (2) ;
d) mettre les ébauches de maillons (2) en forme finale par un usinage d'ébauche final ;
e) amincir la surface (12) de l'anneau (8) assurant la liaison des ébauches de maillons (2) entre elles jusqu'à séparation des maillons (14) les uns des autres.

2. Procédé de fabrication selon la revendication 1, **caractérisé en ce que** le profilé (1) est creux.

3. Procédé selon l'une quelconque des revendications 1 ou 2, **caractérisé en ce que** les fentes (4) sont usinées dans le périmètre extérieur du profilé (1).

4. Procédé selon l'une quelconque des revendications 1 à 3, **caractérisé en ce que** l'étape de mise en forme finale des ébauches de maillons (2) comprend l'usinage de la forme extérieure des ébauches de maillons (2).

5. Procédé selon l'une quelconque des revendication 1 à 4, **caractérisé en ce que** l'étape de mise en forme finale des ébauches de maillons (2) comprend en outre le perçage de trous (18) destinés à recevoir des barrettes de fixation des maillons (14) entre eux.

6. Procédé selon l'une quelconque des revendications 4 ou 5, **caractérisé en ce que** la forme des maillons (14) est en H, la barre transversale (16) du H s'étendant selon la direction générale d'extrusion (A).

7. Procédé selon l'une quelconque des revendications précédentes, **caractérisé en ce que** qu'il comprend en outre une étape de polissage des maillons séparés (14).

8. Procédé selon l'une quelconque des revendications précédentes, **caractérisé en ce que** le matériau du profilé (1) est choisi parmi l'aluminium, l'argent, l'or, le titane, une céramique ou un matériau plastique.

## Patentansprüche

1. Verfahren zur losweisen Herstellung mehrerer Armbandglieder (14), **dadurch gekennzeichnet, dass** es die folgenden Schritte umfasst:
a) Bereitstellen eines Profilelements (1) aus einem Material, in dem die Rohglieder (2) voneinander in Querrichtung durch Schlitze (4) begrenzt sind, die sich in einer allgemeinen Strangpressrichtung (A) des Profilelements (1) erstrecken;
b) gegebenenfalls Ausführen einer Rohling Bearbeitung an dem noch immer zusammenhängenden Profilelement (1);
c) Ablängen des Profilelements (1) auf einer bestimmten Länge (L), die die Breite der Rohglieder (2) definiert, in Teilstücke, um einen Ring (8) zu erhalten, der an seinem Umfang (10) die Rohglieder (2) trägt;
d) Aufbereiten der Rohglieder (2) in eine endgültige Form durch endgültiges Rohling Bearbeitung;
e) Abschrägen der Oberfläche (12) des Rings (8), was die Verbindung der Rohglieder (2) untereinander bis zur Abtrennung der Glieder (14) voneinander gewährleistet.

2. Herstellungsverfahren nach Anspruch 1, **dadurch gekennzeichnet, dass** das Profilelement (1) hohl ist.

3. Verfahren nach einem der Ansprüche 1 oder 2, **dadurch gekennzeichnet, dass** die Schlitze (4) in dem äußeren Umfang des Profilelements (1) bearbeitet werden.

4. Verfahren nach einem der Ansprüche 1 bis 3, **dadurch gekennzeichnet, dass** der Schritt des endgültigen Aufbereitens der Rohglieder (2) die Bearbeitung der äußeren Form der Rohglieder (2) umfasst.

5. Verfahren nach einem der Ansprüche 1 bis 4, **dadurch gekennzeichnet, dass** der Schritt des endgültigen Aufbereitens der Rohglieder (2) außerdem das Ausbilden von Löchern (18) umfasst, die dazu bestimmt sind, Stege für die Befestigung der Glieder (14) aneinander aufzunehmen.

6. Verfahren nach einem der Ansprüche 4 oder 5, **dadurch gekennzeichnet, dass** die Gestalt der Glieder (14) ein H ist, wobei sich der Querbalken (16) des H in der allgemeinen Strangpressrichtung (A) erstreckt.

7. Verfahren nach einem der vorhergehenden Ansprüche, **dadurch gekennzeichnet, dass** es außerdem einen Schritt des Polierens der abgetrennten Glieder (14) umfasst.

8. Verfahren nach einem der vorhergehenden Ansprüche, **dadurch gekennzeichnet, dass** das Material des Profilelements (1) unter Aluminium, Silber, Gold, Titan, einer Keramik oder einem Kunststoff gewählt ist.

## Claims

1. Method of batch manufacturing bracelet links (14), **characterized in that** the method includes the steps of:
a) taking a profile bar (1) made of a material in which the link blanks (2) are delimited in relation to each other transversely by slots (4) extending in a general direction of extrusion (A) of the profile bar (1);
b) performing a first rough machining, if necessary, in the profile bar, while it is still in a single piece,
c) cutting the profile bar (1) over a determined length (L) defining a width of the link blanks (2) so as to obtain a ring (8) having the link blanks (2) at the periphery (10) thereof;
d) shaping the link blanks (2) into the final form by a final rough machining operation;
e) thinning the surface (12) of the ring (8) forming the connection between the link blanks (2) until the links (14) are separated from each other.

2. Manufacturing method according to claim 1, **characterized in that** the profile bar (1) is hollow.

3. Method according to any of claims 1 or 2, **characterized in that** the slots (4) are machined in the external periphery of the profile bar (1).

4. Method according to any of claims 1 to 3, **characterized in that** the final step of shaping the link blanks (2) includes the machining of the external shape of the link blanks (2).

5. Method according to any of claims 1 to 4, **characterized in that** the final step of shaping the link blanks (2) further includes the drilling of holes (18) intended to receive the bars securing the links (14) to each other.

6. Method according to any of claims 4 or 5, **characterized in that** the form of the links (14) is H-shaped, the cross bar (16) of the H extending in the general direction of extrusion (A).

7. Method according to any of the preceding claims, **characterized in that** the method further includes a step of polishing the separate links (14).

8. Method according to any of the preceding claims, **characterized in that** the material of the profile bar (1) is selected from among aluminium, silver, gold, titanium, a ceramic or plastic material.
